# EUROPÄISCHE PATENTSCHRIFT

(11) **EP 1 733 554 B1**
(45) Veröffentlichungstag und Bekanntmachung des Hinweises auf die Patenterteilung: **04.03.2009**
(21) Anmeldenummer: 05736197.4
(22) Anmeldetag: 15.03.2005
(51) Int. Cl.: H04N 5/232, G02B 7/08

(54) **VORRICHTUNG ZUM EINSTELLEN DER BILDSCHÄRFE AM KAMERAOBJEKTIV EINER LAUFBILDKAMERA**
DEVICE FOR ADJUSTING THE PICTURE DEFINITION ON THE CAMERA OBJECTIVE OF A MOTION-PICTURE CAMERA
DISPOSITIF POUR REGLER LA NETTETE D'IMAGE AU NIVEAU DE L'OBJECTIF D'UNE CAMERA

(30) Priorität: 25.03.2004 DE 102004015947
(43) Veröffentlichungstag der Anmeldung: 20.12.2006
(73) Patentinhaber: ARNOLD & RICHTER CINE TECHNIK GMBH & CO. BETRIEBS KG, 80799 München (DE)
(72) Erfinder: BAUER, Fritz, Gabriel, A-3002 Purkersdorf (AT); HAUBMANN, Michael, A-1230 Wien (AT)
(74) Vertreter: Ninnemann, Detlef
(86) Internationale Anmeldenummer: PCT/DE2005/000497
(87) Internationale Veröffentlichungsnummer: WO 2005/096618

(56) Entgegenhaltungen:
- EP-A- 0 574 105
- EP-A- 0 843 188
- US-A- 4 320 947
- US-A- 5 003 400
- US-A- 5 654 757
- US-A1- 2003 011 692
- US-A1- 2004 046 938
- DATABASE WPI Section PQ, Week 199042 Derwent Publications Ltd., London, GB; Class P81, AN 1990-317174 XP002332012 -& JP 02 226878 A (RICOH KK) 10. September 1990 (1990-09-10) -& PATENT ABSTRACTS OF JAPAN Bd. 014, Nr. 533 (E-1005), 22. November 1990 (1990-11-22) & JP 02 226878 A (RICOH CO LTD), 10. September 1990 (1990-09-10)

## Beschreibung

Die Erfindung betrifft eine Vorrichtung zum Einstellen der Bildschärfe am Kameraobjektiv einer Laufbildkamera.

Zum Einstellen der Bildschärfe bzw. zum Fokussieren von Aufnahmebildern oder Aufnahmesequenzen von Laufbildkameras ist es bekannt, eine Schärfenzieheinrichtung mit dem Kameraobjektiv zu verbinden, die zur Entlastung des Kameramanns von einem Bildschärfeassistenten manuell bedient wird. Die Schärfenzieheinrichtung ist entweder mechanisch mit dem Objektivring zur Bildschärfeeinstellung des Kameraobjektivs verbunden, oder eine in horizontaler oder vertikaler Anordnung am Kameraobjektiv angeordnete, elektromotorisch betriebene Antriebseinheit überträgt zur Schärfeeinstellung entsprechend der EP 0 575 022 B1 über ein Zahnritzel ein Drehmoment auf die Außenverzahnung des Bildschärfe-Objektivringes.

Gleichzeitig kann mit der Antriebseinheit zur Einstellung der Position des Bildschärfe-Objektivrings eine mit dem Objektivring gekoppelte Vorrichtung zur Ermittlung des Ist-Zustandes der Objektivringposition entsprechend der EP 0 942 305 A1 vorgesehen werden, die die tatsächliche Position des Objektivrings relativ zum Objektiv ermittelt und in ein Messausgangssignal umwandelt.

Die Ansteuerung der Antriebseinheit zur Bildschärfeeinstellung kann entsprechend der EP 0 574 105 A1 über ein Steuersystem erfolgen, das mehrere mit den Objektivringen des Kameraobjektivs einer Laufbildkamera entsprechend der EP 0 575 022 B1 gekoppelte Motoreinheiten zur Zoom-, Fokus- und Blendeneinstellung, in die Positionsgeber integriert sind, und eine oder mehrere Handbedieneinheiten umfasst, mit denen sowohl Einstellwerte als auch Bereichsgrenzen analog und/oder elektronisch einstellbar sind. Die Motoreinheiten und die Handbedieneinheit sind über einen seriellen Steuer- und Datenbus miteinander verbunden.

Alternativ kann entsprechend der DE 196 29 484 A1 die Verbindung zwischen den mit den Objektivringen des Kameraobjektivs der Laufbildkamera gekoppelten Antriebseinheiten und Positionsgeber mit einer oder mehreren Handbedieneinheiten zur Zoom-, Bildschärfe- und Blendeneinstellung über eine drahtlose Steuerung und Überwachung von Kamerafunktionen und damit zur Bildschärfeeinstellung vorgesehen werden, bei der eine kameraseitige Steuer- und Erfassungseinheit über Leitungsverbindungen mit einer Fokus-, Zoom- und Iris-Antriebseinheit verbunden ist und ein Funkmodem enthält, das Steuersignale zu einer Fernbedienungs-Kontrolleinheit überträgt und von dieser empfängt. Die bedienerseitige Kontrolleinheit weist zur Fokussierung bzw. Bildschärfeeinstellung ein Handrad auf, das mit einer Skala hinterlegt ist, auf der Bereichsgrenzen zur Bildschärfeeinstellung eingestellt werden können. Ein mit dem Handrad verbundenes Potentiometer gibt Absolutwerte als Sollwerte zur Einstellung der Bildschärfe am Kameraobjektiv vor, die über die Funkübertragungsstrecke zur kameraseitigen Steuer- und Erfassungseinheit übertragen werden, die die mit den Bildschärfe-Objektivringen verbundene Motor- oder Antriebseinheit zur Einstellung des Bildschärfe-Objektivrings auf die von der bedienerseitigen Kontrolleinheit vorgegebene Sollposition einstellt.

Da eine manuelle Fokussierung in speziellen Aufnahmesituationen, beispielsweise bei großen oder sehr geringen Distanzen und bei sehr schnellen Bildschärfeveränderungen, nur schwer durchführbar ist, ist es beispielsweise aus der DE 42 05 397 A1 bekannt, eine automatische Fokussierung anzuwenden, bei der eine Autofokussiereinrichtung mittels eines Ultraschall- oder Lasermessgerätes die Entfernung zwischen einem Aufnahmeobjekt und der Laufbildkamera erfasst und die zur Scharfstellung des Aufnahmebildes bzw. der Aufnahmesequenz erforderliche Bildschärfe am Kameraobjektiv der Laufbildkamera einstellt.

Aus der US-A-4,320,947 ist eine Vorrichtung zum Einstellen der Bildschärfe an einem Kameraobjektiv einer Laufbildkamera bekannt, die eine mit dem Kameraobjektiv verbundene Antriebseinheit aufweist, die in einem manuellen Fokussierbetrieb von einem Handrad einer Bedienungseinheit und in einem automatischen Fokussierbetrieb von einer Autofokussiereinrichtung zum Messen der Entfernung eines Aufnahmeobjekts von der Laufbildkamera in Abhängigkeit von der gemessenen Entfernung des Aufnahmeobjekts gesteuert wird. Die Bedienungseinheit zeigt die mit dem Handrad eingestellte Bildschärfe an einer Skala an, während die Autofokussiereinrichtung Steuersignale an ein mit dem Handrad der Bedienungseinheit verbundenes elektromechanisches Stellglied zum Einstellen oder Nachführen der am Handrad eingestellten Bildschärfe abgibt.

Aus der US 2004/0046938 A1 ist eine Vorrichtung zum Einstellen der Bildschärfe am Kameraobjektiv einer Laufbildkamera bekannt, die eine mit dem Kameraobjektiv verbundene Antriebseinheit aufweist, die in einem manuellen Fokussierbetrieb von einem Handrad einer Bedienungseinheit und in einem automatischen Fokussierbetrieb von einer Autofokussiereinrichtung zum Messen der Entfernung eines Aufnahmeobjekts von der Laufbildkamera in Abhängigkeit von der gemessenen Entfernung des Aufnahmeobjekts gesteuert wird. Die Bedienungseinheit zeigt die mit dem Handrad eingestellte Bildschärfe und die von der Autofokussiereinrichtung ermittelte Bildschärfe an zwei Anzeigen einer Anzeigeeinrichtung an. Die Bedienungseinheit und die Autofokussiereinrichtung geben Steuersignale an einem Motor zum Einstellen der Bildschärfe des Kameraobjektives ab. Die Antriebseinheit wird über eine elektrische Leitungsverbindung oder eine Funkverbindung in einem manuellen Fokussierbetrieb von der Bedienungseinheit und in einem automatischen Fokussierbetrieb von der Autofokussiereinrichtung gesteuert.

In vielen Anwendungsfällen ist ein Wechsel von der automatischen Fokussierung zur manuellen Fokussierung erwünscht. Beim Umschalten vom automatischen Fokussierungsbetrieb zum manuellen Fokussierungsbetrieb, das beispielsweise dann erforderlich werden kann, wenn ein Aufnahmeobjekt aus dem Aufnahmebild verschwindet und die Bildschärfe auf unendlich gestellt wird, tritt das Problem auf, dass der an der manuellen Bedienungseinheit eingestellte, manuell vorgegebene Bildschärfe-Sollwert übernommen wird, der von dem von der Autofokussiereinrichtung an die Antriebseinheit zur Bildschärfeeinstellung abgegebenen letzten Sollwert abweicht, so dass es beim Übergang vom automatischen Fokussierungsbetrieb zum manuellen Fokussierungsbetrieb zu nicht tolerablen Unschärfen oder ungewünschten Bildschärfeverlagerungen kommt.

Hiervon ausgehend liegt der vorliegenden Erfindung die Aufgabenstellung zugrunde, Veränderungen der am Kameraobjektiv einer Laufbildkamera eingestellten Bildschärfe beim Übergang vom automatischen Fokussierbetrieb zum manuellen Fokussierbetrieb auszuschließen.

Diese Aufgabenstellung wird erfindungsgemäß durch Vorrichtungen mit den Merkmalen der Ansprüche 1 und 4 gelöst.

Die erfindungsgemäßen Lösungen gewährleisten, dass beim Übergang vom automatischen zum manuellen Fokussierbetrieb keine Bildschärfeveränderungen und insbesondere keine unerwünschten Unschärfen oder Schärfeverlagerungen auftreten.

Da die Autofokussiereinrichtung die Bildschärfe kontinuierlich einstellt, ist ein Nachführen der Autofokussiereinrichtung nicht erforderlich, so dass beim Übergang vom manuellen Fokussierbetrieb auf den automatischen Fokussierbetrieb keine unerwünschten Unschärfen eines zuvor manuell scharf eingestellten Aufnahmebildes auftreten. Wurde im vorangegangenen manuellen Fokussierbetrieb eine bewusste Unschärfe des Aufnahmebildes eingestellt, so bleibt diese bewusst eingestellte Unschärfe im Moment des Übergangs vom manuellen Fokussierbetrieb auf den automatischen Fokussierbetrieb erhalten und anschließend erfolgt mittels der Autofokussiereinrichtung ein Scharfstellen des Aufnahmebildes.

Unabhängig davon, ob die verwendete Bedieneinheit aus einer manuellen Schärfenzieheinrichtung zur Übertragung von Drehbewegungen, einen Schärfenstellring eines Kameraobjektivs oder um eine drahtgebundene oder drahtlose Übertragung von einer Fernbedienungseinheit zu einer Objektivsteuerung der Laufbildkamera handelt, stellt diese Vorrichtung eine Übereinstimmung zwischen der von der Autofokussiereinrichtung ermittelten und am Bildschärfe-Objektivring des Kameraobjektivs eingestellten Schärfenposition und der an der Bedieneinheit eingestellten bzw. angezeigten Schärfeposition her, indem die Einrichtung zum Einstellen oder Nachführen der Eingabe- oder Anzeigeeinrichtung der Bedienungseinheit in Abhängigkeit von den von der Autofokussiereinrichtung abgegebenen Steuersignalen die Eingabeeinrichtung in Form beispielsweise eines manuellen Bildschärfe-Handrades oder zumindest eines Teils des Bildschärfe-Handrades oder die Anzeigeeinrichtung in Form einer Skalenscheibe elektromotorisch oder elektronisch in eine dem von der Autofokussiereinrichtung abgegebenen Steuersignalen entsprechende Stellung bringt.

Abhängig von der Ansteuerung der Antriebseinheit über eine drahtgebundene oder drahtlose Verbindung mit einer Fernbedienungseinheit oder mittels einer manuellen Schärfenzieheinrichtung kann die Vorrichtung unterschiedlich konfiguriert werden.

Die Antriebseinheit ist über eine elektrische Leitungsverbindung oder eine Funkverbindung im manuellen Fokussierbetrieb von der Bedienungseinheit und im automatischen Fokussierbetrieb von der Autofokussiereinrichtung ansteuerbar, die im automatischen Fokussierbetrieb Steuersignale über elektrische Leitungsverbindungen oder eine Funkverbindung sowohl an die Antriebseinheit als auch an die Bedienungseinheit abgibt. Die Eingabeeinrichtung der Bedieneinheit enthält ein elektromechanisches Stellglied zur Abgabe von stellungsabhängigen Signalen zum Einstellen oder Nachführen der Bildschärfe, dessen Stellung vorzugsweise relativ zu einer Referenzposition in Abhängigkeit von den von der Autofokussiereinrichtung abgegebenen Steuersignalen veränderbar ist, wobei das elektromechanische Stellglied vorzugsweise aus einem als Absolutgeber ausgebildeten Bildschärfe-Handrad besteht.

Die Anzeigeeinrichtung der Bedienungseinheit kann aus einer Skalenscheibe, insbesondere einer beschriftbaren Skalenscheibe, bestehen, deren Stellung relativ zu einer Referenzposition in Abhängigkeit von den von der Autofokussiereinrichtung abgegebenen Steuersignalen veränderbar ist.

Zusätzlich kann die Skalenscheibe mit Anschlägen zur Begrenzung des Bildschärfe-Einstellbereichs verbunden werden, deren Position auf der Skalenscheibe in Abhängigkeit von den von der Autofokussiereinrichtung abgegebenen Steuersignalen veränderbar ist.

Zum Einstellen oder Nachführen des von der Autofokussiereinrichtung abgegebenen Steuersignals bzw. Sollwertes werden die Skalenscheibe und/oder die Anschläge zur Begrenzung des Bildschärfe-Einstellbereichs über ein Differenzialgetriebe ohne Verstellung der Eingabeeinrichtung verstellt oder die Eingabeeinrichtung und/oder die Anzeigeeinrichtung der Bedienungseinheit wird mittels einer Motor-Getriebeanordnung oder über einen Direktantrieb, insbesondere mittels eines Elektromotors oder eines Ultraschallmotors, in Abhängigkeit von den von der Autofokussiereinrichtung abgegebenen Steuersignalen verstellt. Dabei können die Eingabeeinrichtung und/oder die Anzeigeeinrichtung der Bedienungseinheit über eine Kupplung mit der Motor-Getriebe-Anordnung oder mit dem Direktantrieb verbunden werden.

Ein elektromechanisches Stellglied für die Eingabe- oder Anzeigeeinrichtung der Bedieneinheit kann aus einer Motor-/Getriebeeinheit, einem als Elektromotor oder Ultraschallmotor ausgebildeten Direktantrieb oder dergleichen bestehen.

Die Bedienungseinheit kann über einen Positionsgeber mit einem Mikroprozessor verbunden werden, der über einen Verstellmotor und ein Getriebe die Eingabe- und/oder Anzeigeeinrichtung der Bedienungseinheit in Abhängigkeit von den von der Autofokussiereinrichtung abgegebenen Steuersignalen verstellt, wobei ein Autofokus-Tastschalter oder Autofokus-Schalter zum Initiieren des automatischen oder manuellen Fokussierbetriebes mit einem Eingang des Mikroprozessors verbunden ist.

Bei der Anordnung eines Autofokus-Tastschalters wird eine Übernahme des bzw. der von der Autofokussiereinrichtung an die mit dem Kameraobjektiv verbundene Antriebseinheit abgegebenen Bildschärfe-Sollwertes bzw. Bildschärfe-Sollwerte an die Bedienungseinheit ausgelöst, während ein Autofokus-Schalter in einer ersten Stellung den automatischen Fokussierbetrieb und in einer zweiten Stellung den manuellen Fokussierbetrieb aktiviert, wobei in der ersten Stellung des Autofokus-Schalters und/oder bei der Umschaltung des Autofokus-Schalters von der ersten in die zweite Stellung die Bedienungseinheit mit den Steuersignalen der Autofokussiereinrichtung beaufschlagt wird.

Weitere Merkmale und Vorteile der Erfindung sollen anhand von Ausführungsbeispielen erläutert werden, die in den Zeichnungsfiguren dargestellt sind. Es zeigen:
- Fig. 1: eine schematische Darstellung einer Bildschärfeeinstellung am Kameraobjektiv einer Laufbildkamera im automatischen Fokussierbetrieb mit einer Autofokussiereinrichtung oder im manuellen Fokussierbetrieb mit einer manuellen Bedienungseinheit, die über ein Kabel mit der Laufbildkamera verbunden ist;
- Fig. 2: eine schematische Darstellung einer Bildschärfeeinstellung am Kameraobjektiv einer Laufbildkamera mit einer manuellen Schärfenzieheinrichtung die nicht zur beanspruchten Erfindung gehört und
- Fig. 3: eine schematische Darstellung einer Einrichtung zum Einstellen oder Nachführen der Eingabe- oder Anzeigeeinrichtung der Bedienungseinheit.

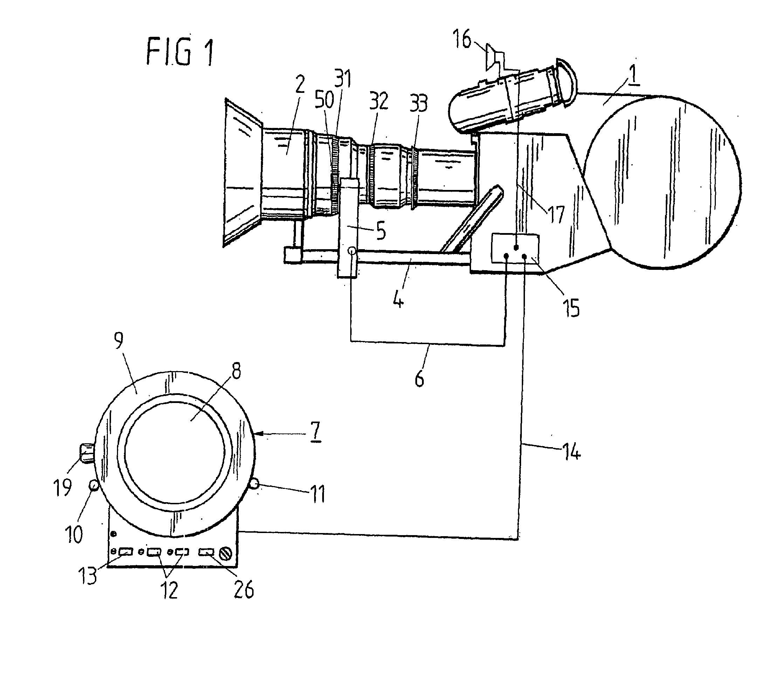

Fig. 1 zeigt in schematischer Anordnung eine Laufbildkamera 1 mit einem am Kameragehäuse befestigten Kameraobjektiv 2, das drei Objektivringe 31, 32, 33 mit einer Außenverzahnung aufweist, von denen der Objektivring 31 der Bildschärfeneinstellung, der Objektivring 32 der Einstellung der Blendenöffnung einer Irisblende und der Objektivring 33 der Brennweiten(Zoom)-Einstellung des Kameraobjektivs 2 dient.

Den Objektivringen 31, 32, 33 sind Antriebseinheiten zugeordnet, von denen zur besseren Erkennbarkeit nur die hier interessierende Antriebseinheit 5 zur Einstellung der Bildschärfe dargestellt ist. Die Antriebseinheiten 5 sind auf zwei mit dem Gehäuse der Laufbildkamera 1 verbundenen Irisstangen 4 befestigt und greifen jeweils mit einem Ritzel 50 in die Außenverzahnung des Ihnen zugeordneten Objektivrings 31, 32, 33 zur Einstellung eines vorbestimmten Sollzustandes der Objektivringe 31, 32, 33 ein.

Die Antriebseinheiten 5 sind über eine Kabelverbindung 6 mit einem Steueranschluss 15 der Laufbildkamera 1 verbunden. Wird über den Steueranschluss 15 und die Kabelverbindung 6 ein Steuerbefehl an eine der Antriebseinheiten 5 abgegeben, so versetzt diese das von einem Elektromotor angetriebene Ritzel 50 in eine Drehbewegung bis die vorgegebene Sollposition des betreffenden Objektivringes 31, 32, 33 erreicht ist.

Die Abgabe von Sollwerten zur Bildschärfeneinstellung des Kameraobjektivs 2 erfolgt wahlweise über eine manuelle Bedienungseinheit 7 oder eine mit der Laufbildkamera 1 verbundene Autofokussiereinrichtung 16, die über elektrische Leitungen 14 bzw. 17 mit dem Steueranschluss 15 der Laufbildkamera 1 verbunden sind. Die manuelle Bedienungseinheit 7 weist ein Bildschärfe-Handrad 8, eine austauschbare Skalenscheibe 9, auf der zusätzlich oder alternativ eigene Markierungen angebracht werden können, eine Referenzmarkierung 19 sowie verschiebbare, mechanisch justierbare Endanschläge 10, 11 auf, mit denen der Anwender bestimmte Eckwerte seiner Verstellung einstellen kann.

Zur präzisen Einstellung des Bildschärfe-Objektivringes 31 sind Druckschalter 12 zur elektronischen Einstellung und Eingrenzung des Bereiches vorgesehen, über den die Bildschärfe verändert werden kann. Auf diese Weise kann der Verstellbereich beliebig eingegrenzt werden, jedoch bleibt für den eingegrenzten Bereich der gesamte Drehbereich des Bildschärfe-Handrades 8 innerhalb der eingestellten Endanschläge 10, 11 zur Verfügung, so dass die Einstellung des Bildschärfe-Objektivringes 31 entsprechend einer mechanischen Schärfenzieheinrichtung mit einer Untersetzung für besonders feinfühliges Regeln äußerst präzise erfolgen kann.

Darüber hinaus wird durch die Bereichseingrenzung der Bildschärfeneinstellung ermöglicht, den Bildschärfe-Objektivring 31 exakt und wiederholgenau auf die durch die Bereichsgrenzen definierten Einstellwerte zu positionieren, so dass bei einer Wiederholung von Aufnahmeszenen mit definierten Anfangs- und Endbedingungen gearbeitet werden kann.

Ein weiterer Tastschalter 13 dient zur automatischen Kalibrierung der Endanschläge des Bildschärfe-Objektivringes 31 zur Schonung des Objektivanschlags.

Die Autofokussiereinrichtung 16 enthält eine Entfernungsmesseinrichtung zur Bestimmung des Abstandes eines Aufnahmeobjektes von der Laufbildkamera 1 mittels Infrarot- oder Ultraschallmessung sowie einen Sollwertgeber zur Abgabe eines Sollwertes an eine kamerainterne Steuer- und Regeleinrichtung bzw. über den Steueranschluss 15 und die Kabelverbindung 6 direkt an die Antriebseinheit 5 zur Einstellung des Bildschärfe-Objektivringes 31 auf die vorgegebene Sollposition.

Zusätzlich zur Antriebseinheit 5 oder in Kombination mit der Antriebseinheit 5 kann eine Vorrichtung zur Ermittlung des Ist-Zustandes der Position der Objektivringe 31, 32, 33 vorgesehen werden, die die tatsächliche Position der Objektivringe 31, 32, 33 relativ zum Kameraobjektiv 2 ermittelt und in ein Messausgangssignal umwandelt, so dass die über die Antriebseinheiten 5 ausgeführten Einstellbewegungen kontrolliert und gegebenenfalls nachgestellt werden können.

Zum Wechsel vom automatischen Fokussierbetrieb in den manuellen Fokussierbetrieb ist ein an der Bedienungseinheit 7 angeordneter Autofokus-Taster 26 vorgesehen, mit dessen Betätigung die Sollwertabgabe der Autofokussiereinrichtung 16 von der Sollwertabgabe der manuellen Bedienungseinheit 7 abgelöst wird. Zur Nachführung der Sollwerteinstellung an der manuellen Bedienungseinheit 7 wird während oder bei Beendigung des automatischen Fokussierbetriebes das von der Autofokussiereinrichtung 16 über die Steuereinrichtung der Laufbildkamera 1 an die Antriebseinheit 5 abgegebene Steuer- oder Sollwertsignal gleichzeitig an die manuelle Bedienungseinheit 7 abgegeben. Die Abgabe des Steuersignals an die manuelle Bedieneinheit 7 kann während des automatischen Fokussierbetriebs kontinuierlich oder in vorgegebenen Intervallen erfolgen. Alternativ kann bei einer Betätigung des Autofokus-Tasters 26 eine Angleichung der Einstellung der manuellen Bedienungseinheit 7 an den letzten von der Autofokussiereinrichtung 16 abgegebenen Sollwert erfolgen, bevor die Steuereinrichtung der Laufbildkamera 1 die von der manuellen Bedienungseinheit 7 abgegebenen Sollwertsignale zur Einstellung des Bildschärfe-Objektivrings 31 mittels der Antriebseinheit 5 weiter verarbeitet.

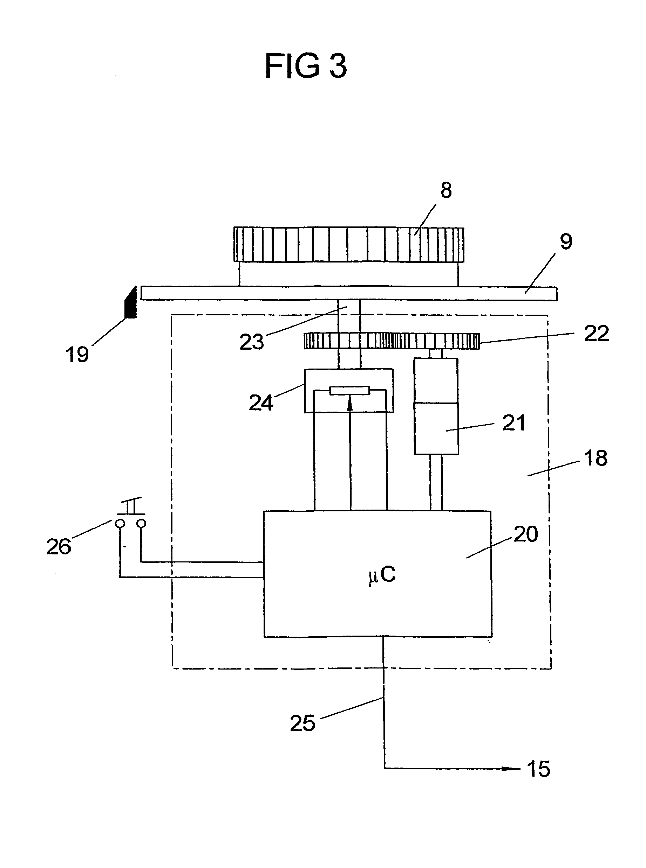

Zum Einstellen bzw. Nachführen der Bedienelemente 8 bis 11 der manuellen Bedienungseinheit 7 ist eine geeignete Antriebseinrichtung vorgesehen, beispielsweise eine in Fig. 3 dargestellte Motor-Getriebeeinheit, ein Direktantrieb oder dergleichen.

Zur Sollwertnachführung bzw. Sollwerteinstellung wird entweder das Bildschärfe-Handrad 8 über die Motor-Getriebeeinheit 18 gemäß Fig. 3 oder über einen Direktantrieb mittels eines Elektromotors oder Ultraschallmotors eingestellt bzw. nachgeführt oder die Skalenscheibe 9 und die Anschläge 10, 11 werden über ein Differenzialgetriebe verdreht, ohne dass sich das Bildschärfe-Handrad 8 bei der Verstellung mitdreht.

Alternativ kann die Skalenscheibe 9 in Verbindung mit den Anschlägen 10, 11 durch die Antriebseinrichtung verdreht werden, wobei zuvor das Bildschärfe-Handrad 8 ausgekoppelt wurde.

Anstelle einer Kabelverbindung zwischen der manuellen Bedienungseinheit 7 und dem Steueranschluss 15 der Laufbildkamera 1 kann eine kabellose Datenübertragung mit einem Mikrowellen-Transceiver vorgesehen werden, bei der die Steuereinrichtung der Laufbildkamera 1 mit einer kameraseitigen Steuer- und Erfassungseinheit und mit den Antriebseinheiten 5 zur Verstellung der Objektivringe 31, 32, 33 des Kameraobjektivs 2 verbunden ist. Die Bedienungseinheit 7 weist in dieser Ausführung ebenfalls ein Bedienungshandrad oder mehrere Bedienungshandräder zur Eingabe von Zoom-, Iris-und/oder Fokussier-Sollwerten, entsprechende Skalenscheiben zur Anzeige sowie ein mit einer Antenne verbundenes Funkmodem auf, über das die an den Bedienungshandrädern eingestellten Sollwerte zur kameraseitigen Steuer- und Erfassungseinheit übertragen werden.

Werden die an der manuellen Fernbedienungseinheit eingestellten Sollwerte über Potentiometer, Kodierscheiben oder dergleichen generiert, so ist zur Nachführung der von der Autofokussiereinrichtung abgegebenen Sollwerte analog zur vorstehend beschriebenen kabelgebundenen Signalübertragung ein Direktantrieb oder eine Motor-Getriebeeinheit zum Verstellen des Bedienungshandrades bzw. der Skalenscheibe und der Anschläge vorgesehen. Auch in dieser Ausführungsform folgt die Nachführung kontinuierlich oder in Intervallen bzw. bei Bedienung eines Tastschalters zum Wechsel vom automatischen Fokussierbetrieb in den manuellen Fokussierbetrieb mit einer Eingabe des letzten von der Autofokussiereinrichtung abgegebenen Sollwertes zur Einstellung des Bedienungshandrades bzw. der Skalenscheibe und der Anschläge vor einer Sollwertabgabe seitens der Fernbedienungseinheit.

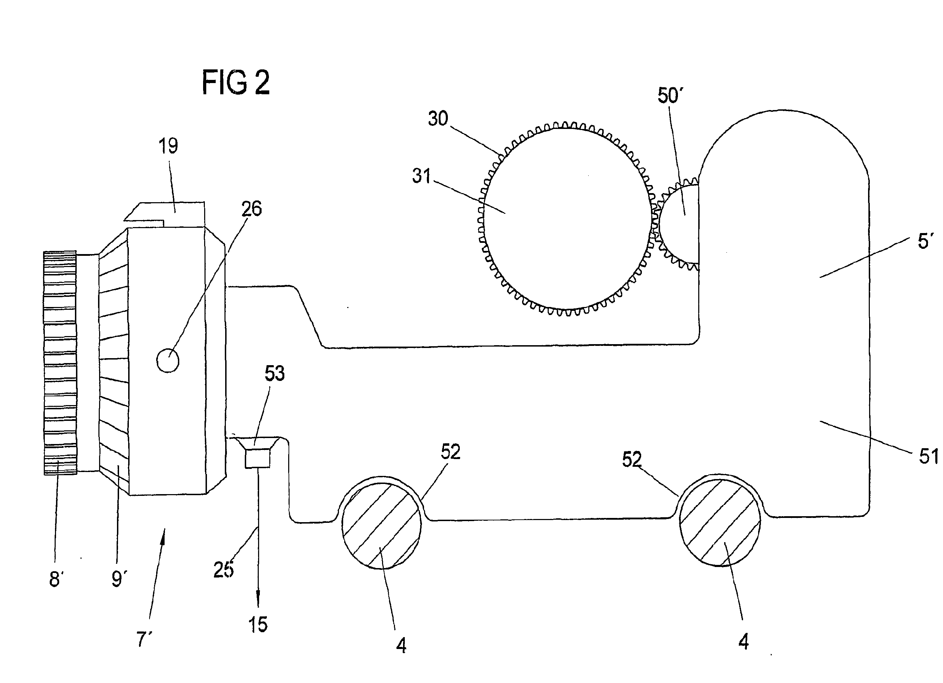

In Fig. 2 ist schematisch eine manuelle Schärfenzieheinrichtung 7' zur Übertragung von Bildschärfeeinstellungen an einem Bildschärfe-Handrad 8' auf den Bildschärfe-Objektivring 31 dargestellt.

Die Schärfenzieheinrichtung 7' besteht aus einem Verstellschlitten 51, der zwei Klemmverbindungen 52 zur Verbindung der Schärfenzieheinrichtung 7' mit den mit dem Gehäuse der Laufbildkamera 1 verbundenen Irisstangen 4 aufweist. Das Bildschärfe-Handrad 8' ist über eine Antriebsachse mit einer Getriebeeinheit 5' verbunden, die ein Ritzel 50' enthält, das in die Außenverzahnung 30 des Bildschärfe-Objektivrings 31 eingreift und eine Verstellung des Bildschärfe-Handrades 8' unmittelbar in eine Drehung des Bildschärfe-Objektivrings 31 umsetzt. Die Getriebeeinheit 5' enthält beispielsweise miteinander verbundene Stirnzahnräder oder Riemenantriebe zur Umlenkung der Drehbewegung des Bildschärfe-Handrades 8' zum Ritzel 50' entsprechend der DE 94 15 170 U1.

Die Schärfenzieheinrichtung 7' umfasst weiterhin eine - gegebenenfalls beschriftbare - Skalenscheibe 9' sowie eine Referenzmarkierung 19 zur Anzeige des jeweils eingestellten Bildschärfe-Sollwertes.

An dem Verstellschlitten 51 ist ein Adapter 53 angeordnet, der über eine Leitung 25 mit dem Steueranschluss 15 der Laufbildkamera 1 verbunden ist. Zum Nachführen des Bildschärfe-Handrades 8 bzw. der Skalenscheibe 9 ist ein Direktantrieb oder eine in Fig. 3 dargestellte Motor-Getriebeeinheit vorgesehen, die kontinuierlich oder in Intervallen das nachgeführte Bedienelement der Schärfenzieheinrichtung 7' nachführt bzw. einstellt. Auch bei der manuellen Schärfezieheinrichtung kann ein Autofokus-Taster 26 an der Schärfenzieheinrichtung 7' vorgesehen werden, mit dem vom automatischen Fokussierbetrieb auf den manuellen Fokussierbetrieb umgeschaltet und vor der Sollwertabgabe der Schärfenzieheinrichtung 7' die Einstellung bzw. Nachführung des betreffenden Bedienelements 8, 9 der Schärfenzieheinrichtung 7' auf den letzten Sollwert der Autofokussiereinrichtung vorgenommen werden.

Fig. 3 zeigt ein Ausführungsbeispiel für eine elektronisch gesteuerte Motor-Getriebeeinheit 18 zum Einstellen oder Nachführen einer Bedienungseinheit 7, 7' entsprechend den vorstehend beschriebenen Ausführungsbeispielen, die insbesondere dann einzusetzen ist, wenn die betreffende Bedienungseinheit keinen elektromotorischen Antrieb zur Sollwertabgabe enthält. Die Motor-Getriebeeinheit 18 kann entweder in die manuelle Bedienungseinheit 7 gemäß Fig. 1 integriert werden oder beispielsweise an die manuelle Schärfenzieheinrichtung 7' gemäß Fig. 2 zum Nachführen bzw. Einstellen des Bildschärfe-Handrades 8' bzw. der Skalenscheibe 9' angesteckt werden.

Die Motor-Getriebeeinheit 18 enthält einen über eine Leitung 25 mit dem Steueranschluss 15 der Laufbildkamera 1 gemäß Fig. 1 verbundenen Mikrocomputer 20, der eingangsseitig mit einem Autofokus-Taster bzw. Autofokus-Schalter 26 zum Umschalten vom automatischen Fokussierbetrieb in den manuellen Fokussierbetrieb oder umgekehrt verbunden ist. Der Mikrocomputer 20 steuert einen Verstellmotor 21 an, der über ein Getriebe 22 mit der Verstellwelle 23 des Bildschärfe-Handrades 8 und/oder der Skalenscheibe 9 verbunden ist. Zwischen dem Bildschärfe-Handrad 8 und der Skalenscheibe 9 kann ein Differenzialgetriebe oder eine Kupplung vorgesehen werden, mit der das Bildschärfe-Handrad 8 ausgekuppelt wird, so dass die Skalenscheibe 9 mit gegebenenfalls daran angebrachten Anschlägen über das Getriebe 22 vom Elektromotor 21 entsprechend den vom Mikrocomputer 20 abgegebenen Steuersignalen verstellt werden kann, ohne dass das Bildschärfe-Handrad 8 mitverstellt wird.

Am Umfang der Skalenscheibe 9 ist eine Referenzmarkierung 19 angeordnet, an der der jeweils eingestellte Bildschärfe-Sollwert abgelesen werden kann.

Die Verstellwelle 23 ist mit einem Positionsgeber 24 zur Abgabe von Istwertsignalen der eingestellten Position an den Mikrocomputer 20 verbunden. Der Positionsgeber 24 kann beispielsweise aus einem Potentiometer oder aus einem Absolutencoder mit einem optoelektronischen oder elektromagnetischen Erfassungssystem bestehen.

Zum Nachführen der Bedienungseinheit entsprechend den von der Autofokussiereinrichtung 16 gemäß Fig. 1 abgegebenen Sollwerten erhält der Mikrocomputer 20 über die Leitung 25 vom Steueranschluss 15 der Laufbildkamera 1 das jeweilige Steuersignal und aktiviert den Elektromotor 21 in der einen oder anderen Drehrichtung, so dass über das Getriebe 22 das Bildschärfe-Handrad 8 bzw. die Skalenscheibe 9 entsprechend der Sollwertvorgabe der Autofokussiereinrichtung 16 eingestellt wird. Über den Positionsgeber 24 wird die Stellung des Bildschärfe-Handrades 8 bzw. der Skalenscheibe 9 erfasst und der so erfasste Istwert zur Feinjustierung der Einstellung der Bedienungseinheit verarbeitet.

Zur Einstellung des Bildschärfe-Handrades 8 bzw. der Skalenscheibe 9 auf den von der Autofokussiereinrichtung abgegebene Sollwert beim Wechsel vom automatischen Fokussierbetrieb in den manuellen Fokussierbetrieb wird mit der Betätigung des Autofokus-Tasters 26 der zuletzt von der Autofokussiereinrichtung abgegebene Sollwert über den Steueranschluss 15 der Laufbildkamera 1 und die Leitung 25 dem Mikrocomputer 20 zugeführt, der eine entsprechende Einstellung des Bildschärfe-Handrades 8 bzw. der Skalenscheibe 9 über den Elektromotor 21 und das Getriebe 22 sowie die Verstellwelle 23 vornimmt, bevor im manuellen Fokussierbetrieb die am Bildschärfe-Handrad 8 eingestellten Sollwerte zur Bildschärfeneinstellung über den Positionsgeber 24 an den Steueranschluss 15 der Laufbildkamera 1 abgegeben werden.

## Patentansprüche

1. Vorrichtung zum Einstellen der Bildschärfe an einem Kameraobjektiv (2) einer Laufbildkamera (1) mit mindestens einer mit dem Kameraobjektiv (2) der Laufbildkamera (1) verbundenen Antriebseinheit (5), einer Bedienungseinheit (7, 7'), die eine Eingabeeinrichtung (8, 8') zum manuellen Einstellen oder Nachführen der Bildschärfe und eine Anzeigeeinrichtung (9, 9') zur Anzeige der mit der Eingabeeinrichtung (8, 8') eingestellten Bildschärfe enthält, und einer Autofokussiereinrichtung (16) zum automatischen Einstellen oder Nachführen der Bildschärfe am Kameraobjektiv (2) in Abhängigkeit von der Entfernung eines Aufnahmeobjekts von der Laufbildkamera (1), wobei die Eingabeeinrichtung (8, 8') mit einem elektromechanischen Stellglied (18; 20 - 24) zum Einstellen der Eingabeeinrichtung (8, 8') auf die von der Autofokussiereinrichtung (16) am Kameraobjektiv (2) eingestellte oder nachgeführte Bildschärfe verbunden ist, wobei die Eingabeeinrichtung aus einem Bildschärfe-Handrad (8, 8') besteht und die Antriebseinheit (5) über eine elektrische Leitungsverbindung (6) oder eine Funkverbindung in einem manuellen Fokussierbetrieb von der Bedienungseinheit (7, 7') und in einem automatischen Fokussierbetrieb von der Autofokussiereinrichtung (16) ansteuerbar ist, die im automatischen Fokussierbetrieb Steuersignale über elektrische Leitungsverbindungen (17, 6, 14) oder eine Funkverbindung sowohl an die Antriebseinheit (5) als auch an das elektromechanische Stellglied (18; 20 - 24) abgibt.

2. Vorrichtung nach Anspruch 1, **dadurch gekennzeichnet, dass** die Stellung des Bildschärfe-Handrades (8, 8') relativ zu einer Referenzposition in Abhängigkeit von den von der Autofokussiereinrichtung (16) abgegebenen Steuersignalen veränderbar ist.

3. Vorrichtung nach Anspruch 2, **dadurch gekennzeichnet, dass** das Bildschärfe-Handrad (8) als Absolutgeber ausgebildet ist.

4. Vorrichtung zum Einstellen der Bildschärfe an einem Kameraobjektiv (2) einer Laufbildkamera (1) mit mindestens einer mit dem Kameraobjektiv (2) der Laufbildkamera (1) verbundenen Antriebseinheit (5), einer Bedienungseinheit (7, 7'), die eine Eingabeeinrichtung (8, 8') zum manuellen Einstellen oder Nachführen der Bildschärfe und eine Anzeigeeinrichtung (9, 9') zur Anzeige der mit der Eingabeeinrichtung (8, 8') eingestellten Bildschärfe enthält, und einer Autofokussiereinrichtung (16) zum automatischen Einstellen oder Nachführen der Bildschärfe am Kameraobjektiv (2) in Abhängigkeit von der Entfernung eines Aufnahmeobjekts von der Laufbildkamera (1), wobei die Anzeigeeinrichtung aus einer Skalenscheibe (9, 9') besteht, die mit einem elektromechanischen Stellglied (18; 20 - 24) zum Einstellen der Skalenscheibe (9, 9') auf die von der Autofokussiereinrichtung (16) am Kameraobjektiv (2) eingestellte oder nachgeführte Bildschärfe verbunden ist, und wobei die Antriebseinheit (5) über eine elektrische Leitungsverbindung (6) oder eine Funkverbindung in einem manuellen Fokussierbetrieb von der Bedienungseinheit (7, 7') und in einem automatischen Fokussierbetrieb von der Autofokussiereinrichtung (16) ansteuerbar ist, die im automatischen Fokussierbetrieb Steuersignale über elektrische Leitungsverbindungen (17, 6, 14) oder eine Funkverbindung sowohl an die Antriebseinheit (5) als auch an das elektromechanische Stellglied (18; 20 - 24) abgibt.

5. Vorrichtung nach Anspruche 4, **dadurch gekennzeichnet, dass** die Skalenscheibe (9, 9') beschriftbar ist.

6. Vorrichtung nach Anspruch 4 oder 5, **dadurch gekennzeichnet, dass** die Skalenscheibe (9, 9') mit Anschlägen (10, 11) zur Begrenzung des Bildschärfe-Einstellbereichs verbindbar ist, deren Position auf der Skalenscheibe (9, 9') in Abhängigkeit von den von der Autofokussiereinrichtung (16) abgegebenen Steuersignalen veränderbar ist.

7. Vorrichtung nach mindestens einem der voranstehenden Ansprüche 4 bis 6, **dadurch gekennzeichnet, dass** die Skalenscheibe (9, 9') und/oder die Anschläge (10, 11) zur Begrenzung des Bildschärfe-Einstellbereichs über ein Differentialgetriebe ohne Verstellung der Eingabeeinrichtung (7, 7') verstellbar sind.

8. Vorrichtung nach mindestens einem der voranstehenden Ansprüche, **dadurch gekennzeichnet, dass** das Bildschärfe-Handrad (8, 8') und/oder die Skalenscheibe (9, 9') über einen Direktantrieb, insbesondere mittels eines Elektromotors oder eines Ultraschallmotors, in Abhängigkeit von den von der Autofokussiereinrichtung (16) abgegebenen Steuersignalen verstellbar ist bzw. sind.

9. Vorrichtung nach Anspruch 8, **dadurch gekennzeichnet, dass** das Bildschärfe-Handrad (8, 8') und/oder die Skalenscheibe (9, 9') über eine Kupplung mit der Motor-Getriebe-Anordnung (21, 22) oder mit dem Direktantrieb verbindbar ist bzw. sind.

10. Vorrichtung nach mindestens einem der voranstehenden Ansprüche, **dadurch gekennzeichnet, dass** die Bedienungseinheit (7, 7') über einen Positionsgeber (24) mit einem Mikroprozessor (20) verbunden ist, der über einen Verstellmotor (21) und ein Getriebe (22) die Eingabe- und/oder Anzeigeeinrichtung (8, 9) der Bedienungseinheit (7, 7') in Abhängigkeit von den von der Autofokussiereinrichtung (16) abgegebenen Steuersignalen verstellt und dass ein Autofokus-Tastschalter (26) oder Autofokus-Schalter zum Initiieren des automatischen oder manuellen Fokussierbetriebes mit einem Eingang des Mikroprozessors (20) verbunden ist.

11. Vorrichtung nach Anspruch 10, **dadurch gekennzeichnet, dass** der Autofokus-Tastschalter (26) eine Übernahme des bzw. der von der Autofokussiereinrichtung (16) an die mit dem Kameraobjektiv (2) verbundene Antriebseinheit (5) abgegebenen Bildschärfe-Sollwertes bzw. Bildschärfe-Sollwerte an die Bedienungseinheit (7, 7') auslöst.

12. Vorrichtung nach Anspruch 10, **dadurch gekennzeichnet, dass** der Autofokus-Schalter (26) in einer ersten Stellung den automatischen Fokussierbetrieb und in einer zweiten Stellung den manuellen Fokussierbetrieb aktiviert und dass in der ersten Stellung des Autofokus-Schalters und/oder bei der Umschaltung des Autofokus-Schalters von der ersten in die zweite Stellung die Bedienungseinheit (7, 7') mit den Steuersignalen der Autofokussiereinrichtung (16) beaufschlagt wird.

## Claims

1. Device for adjusting the picture definition on a camera objective (2) of a motion-picture camera (1), having at least one drive unit (5) which is connected to the camera objective (2) of the motion-picture camera (1), an operating unit (7, 7') which contains an input apparatus (8, 8') for the manual adjustment or setting of the picture definition and a display apparatus (9, 9') for displaying the picture definition adjusted using the input apparatus (8, 8'), and an autofocussing apparatus (16) for automatically adjusting or setting of the picture definition on the camera objective (2) as a function of the distance of a recording object from the motion-picture camera (1), wherein the input apparatus (8, 8') is connected to an electromechanical actuating member (18; 20-24) for adjusting the input apparatus (8, 8') to the picture definition which is adjusted or set by the autofocussing apparatus (16) on the camera objective (2), wherein the input apparatus comprises a picture definition handwheel (8,8') and the drive unit (5) can be switched via an electric line connection (6) or a radio connection by the operating unit (7, 7') in a manual focussing mode and by the autofocussing apparatus (16) in an automatic focussing mode, which autofocussing apparatus emits control signals via electric line connections (17, 6, 14) or a radio connection both to the drive unit (5) and to the electromechanical actuating member (18; 20-24) in the automatic focussing mode.

2. Device according to Claim 1, **characterized in that** the positioning of the picture definition handwheel (8, 8') relative to a reference position can be changed as a function of the control signals emitted by the autofocussing apparatus (16).

3. Device according to Claim 2, **characterized in that** the picture definition handwheel (8) is in the form of an absolute encoder.

4. Device for adjusting the picture definition on a camera objective (2) of a motion-picture camera (1), having at least one drive unit (5) which is connected to the camera objective (2) of the motion-picture camera (1), an operating unit (7, 7') which contains an input apparatus (8, 8') for the manual adjustment or setting of the picture definition and a display apparatus (9, 9') for displaying the picture definition adjusted using the input apparatus (8, 8'), and an autofocussing apparatus (16) for automatically adjusting or setting of the picture definition on the camera objective (2) as a function of the distance of a recording object from the motion-picture camera (1), wherein the display apparatus comprises a graduated disc (9, 9') which is connected to an electromechanical actuating member (18; 20-24) for adjusting the graduated disc (9, 9') to the picture definition which is adjusted or set by the autofocussing apparatus (16) on the camera objective (2), and wherein the drive unit (5) can be switched via an electric line connection (6) or a radio connection by the operating unit (7, 7') in a manual focussing mode and by the autofocussing apparatus (16) in an automatic focussing mode, which autofocussing apparatus emits control signals via electric line connections (17, 6, 14) or a radio connection both to the drive unit (5) and to the electromechanical actuating member (18; 20-24) in the automatic focussing mode.

5. Device according to Claim 4, **characterized in that** the graduated disc (9, 9') can be written on.

6. Device according to Claim 4 or 5, **characterized in that** the graduated disc (9, 9') can be connected to stops (10, 11) for delimiting the picture-definition adjustment range, the position of which on the graduated disc (9, 9') can be changed as a function of the control signals emitted by the autofocussing apparatus (16).

7. Device according to at least one of the preceding Claims 4 to 6, **characterized in that** the graduated disc (9, 9') and/or the stops (10, 11) for delimiting the picture-definition adjustment range can be adjusted via a differential gear mechanism without adjusting the input apparatus (7, 7').

8. Device according to at least one of the preceding claims, **characterized in that** the picture definition handwheel (8, 8') and/or the graduated disc (9, 9') can be adjusted via a direct drive, in particular by means of an electric motor or an ultrasonic motor, as a function of the control signals which are emitted by the autofocussing apparatus (16).

9. Device according to Claim 8, **characterized in that** the picture definition handwheel (8, 8') and/or the graduated disc (9, 9') can be connected via a coupling to the motor/gear arrangement (21, 22) or to the direct drive.

10. Device according to at least one of the preceding claims, **characterized in that** the operating unit (7, 7') is connected, via a position encoder (24), to a microprocessor (20) which changes the input and/or display apparatus (8, 9) of the operating unit (7, 7'), via a servomotor (21) and a gear mechanism (22), as a function of the control signals emitted by the autofocussing apparatus (16) and **in that** an autofocus push button (26) or autofocus switch is connected to an input of the microprocessor (20) for initiating the automatic or manual focussing mode.

11. Device according to Claim 10, **characterized in that** the autofocus push button (26) triggers a transfer of the picture-definition setpoint value or values, which is or are emitted by the autofocussing apparatus (16) to the drive unit (5) which is connected to the camera objective (2), to the operating unit (7, 7').

12. Device according to Claim 10, **characterized in that** the autofocus switch (26) activates the automatic focussing mode in a first position and the manual focussing mode in a second position and **in that** the operating unit (7, 7') has the control signals from the autofocussing apparatus (16) supplied to it in the first position of the autofocus switch and/or during the switchover of the autofocus switch from the first into the second position.

## Revendications

1. Dispositif pour régler la netteté de l'image au niveau d'un objectif (2) d'une caméra (1) avec au moins une unité d'entraînement (5) reliée à l'objectif (2) de la caméra (1), une unité de commande (7, 7') qui contient un dispositif d'entrée (8, 8'), pour le réglage ou le réajustement manuel de la netteté de l'image et un dispositif d'affichage (9, 9') pour l'affichage de la netteté de l'image réglée à l'aide du dispositif d'entrée (8, 9'), et un dispositif de mise au point automatique (16) pour le réglage ou le réajustement automatique de la netteté de l'image au niveau de l'objectif (2) de la caméra en fonction de l'éloignement d'un objet de prise de vue de la caméra (1), dans lequel le dispositif d'entrée (8, 8') est relié à un organe d'actionnement (18 ; 20 - 24) électromécanique pour le réglage du dispositif d'entrée (8, 8') à la netteté de l'image réajustée ou réglée par le dispositif de mise au point automatique (16) au niveau de l'objectif de la caméra (2), dans lequel le dispositif d'entrée se compose d'un volant de netteté de l'image (8, 8') et l'unité d'entraînement (5) peut être commandée par une liaison par câble (6) électrique ou une liaison radio dans un mode de mise au point manuel par l'unité de commande (7, 7') et dans un mode de mise au point automatique par le dispositif de mise au point automatique (16), qui délivre en mode de mise au point automatique des signaux de commande par des liaisons de câble électriques (17, 6, 14) ou une liaison radio à l'unité d'entraînement (5) ainsi qu'à l'organe d'actionnement (18 ; 20 - 24) électromécanique.

2. Dispositif selon la revendication 1, **caractérisé en ce que** la position du volant de netteté de l'image (8, 8') est modifiable par rapport à une position de référence en fonction des signaux de commande délivrés par le dispositif de mise au point automatique (16).

3. Dispositif selon la revendication 2, **caractérisé en ce que** le volant de netteté de l'image (8) est réalisé comme un émetteur absolu.

4. Dispositif pour régler la netteté de l'image au niveau d'un objectif (2) d'une caméra (1) avec au moins une unité d'entraînement (5) reliée à l'objectif (2) de la caméra (1), une unité de commande (7, 7') qui contient un dispositif d'entrée (8, 8'), pour le réglage ou le réajustement manuel de la netteté de l'image, et un dispositif d'affichage (9, 9') pour l'affichage de la netteté de l'image réglée à l'aide du dispositif d'entrée (8, 9'), et un dispositif de mise au point automatique (16) pour le réglage ou le réajustement automatique de la netteté de l'image au niveau de l'objectif (2) de la caméra en fonction de l'éloignement d'un objet de prise de vue de la caméra (1), dans lequel le dispositif d'entrée (8, 8') se compose d'un cadran gradué (9, 9') qui est relié à un organe d'actionnement (18 ; 20 - 24) électromécanique pour le réglage du cadran gradué (9, 9') à la netteté de l'image réajustée ou réglée par le dispositif de mise au point automatique (16) au niveau de l'objectif de la caméra (2), et dans lequel l'unité d'entraînement (5) peut être commandée par une liaison par câble (6) électrique ou une liaison radio dans un mode de mise au point manuel par l'unité de commande (7, 7') et dans un mode de mise au point automatique par le dispositif de mise au point automatique (16), qui délivre en mode de mise au point automatique des signaux de commande par des liaisons de câble électriques (17, 6, 14) ou une liaison radio à l'unité d'entraînement (5) ainsi qu'à l'organe d'actionnement (18 ; 20 - 24) électromécanique.

5. Dispositif selon la revendication 4, **caractérisé en ce que** le cadran gradué (9, 9') est annotable.

6. Dispositif selon la revendication 4 ou 5, **caractérisé en ce que** le cadran gradué (9, 9') peut être relié à des butées (10, 11) pour la délimitation de la plage de réglage de la netteté de l'image, dont la position sur le cadran gradué (9, 9') est modifiable en fonction des signaux de commande délivrés par le dispositif de mise au point automatique.

7. Dispositif selon au moins l'une quelconque des revendications 4 à 6, **caractérisé en ce que** le cadran gradué (9, 9') et/ou les butées (10, 11) sont réglables pour la délimitation de la plage de réglage de la netteté de l'image par un engrenage différentiel sans réglage du dispositif d'entrée (7, 7').

8. Dispositif selon au moins l'une quelconque des revendications précédentes, **caractérisé en ce que** le volant de netteté de l'image (8, 8') et/ou le cadran gradué (9, 9') est ou sont réglables par un entraînement direct, en particulier au moyen d'un moteur électrique ou un moteur à ultrasons, en fonction des signaux de commande délivrés par le dispositif de mise au point automatique (16).

9. Dispositif selon la revendication 8, **caractérisé en ce que** le volant de netteté de l'image (8, 8') et/ou le cadran gradué (9, 9') peut ou peuvent être reliés par un couplage à l'ensemble moteur-engrenage (21, 22) ou à l'entraînement direct.

10. Dispositif selon au moins l'une quelconque des revendications précédentes, **caractérisé en ce que** l'unité de commande (7, 7') est reliée par un transmetteur de position (24) à un microprocesseur (20), qui règle par un servomoteur (21) et un engrenage (22) le dispositif d'entrée et/ou d'affichage (8, 9) de l'unité de commande (7, 7') en fonction des signaux de commande délivrés par le dispositif de mise au point automatique (16) et **en ce qu'**un bouton-poussoir de mise au point automatique (26) ou commutateur de mise au point automatique est relié pour l'initiation du mode de mise au point automatique ou manuel à une entrée du microprocesseur (20).

11. Dispositif selon la revendication 10, **caractérisé en ce que** le bouton-poussoir de mise au point automatique (26) déclenche une validation de la ou des valeurs de consigne de netteté de l'image délivrées par le dispositif de mise au point automatique (16) à l'unité d'entraînement (5) reliée à l'objectif de la caméra (2) au niveau de l'unité de commande (7, 7').

12. Dispositif selon la revendication 10, **caractérisé en ce que** le commutateur de mise au point automatique (26) active dans une première position le mode de mise au point automatique et dans une seconde position le mode de mise au point manuel, et **en ce que** dans la première position du commutateur de mise au point automatique et/ou lors de la commutation du commutateur de mise au point automatique de la première à la seconde position, l'unité de commande (7, 7') est sollicitée en signaux de commande du dispositif de mise au point automatique (16).
